# EUROPÄISCHE PATENTANMELDUNG

(11) **EP 4 696 523 A1**
(43) Veröffentlichungstag der Anmeldung: **18.02.2026**
(21) Anmeldenummer: 25189819.3
(22) Anmeldetag: 16.07.2025
(51) Int. Cl.: B60C 11/03, B60C 11/13

(54) **LAUFSTREIFEN MIT EINEM EINEN VERÄNDERLICHEN QUERSCHNITT AUFWEISENDEN VORSPRUNG**

(30) Priorität: 16.08.2024 DE 102024207825
(71) Anmelder: Continental Reifen Deutschland GmbH, 30175 Hannover (DE)
(72) Erfinder: Berger, Christoph, 30175 Hannover (DE); Seng, Matthias, 30175 Hannover (DE); Wiese, Klaus, 30175 Hannover (DE)
(74) Vertreter: Continental Corporation

(57) **Zusammenfassung**

Fahrzeugreifenlaufstreifen mit radial unterhalb einer Basisfläche (3) verlaufendem Negativvolumen (4) und radial oberhalb der Basisfläche verlaufendem Vorsprungvolumen (6), wobei Schnittlinien (7) an der Grenze zwischen dem Negativvolumen (4) und der Basisfläche (3) wenigstens punktweise bestimmbare Verlaufsrichtungen (5) aufweisen, wobei eine Verlaufsrichtung an einem ersten Punkt (P1) einen größeren Winkel mit der Axialrichtung einschließt an einem zweiten Punkt (P2), wobei das einem jeweiligen Punkt (P1, P2) am nächsten gelegene Vorsprungvolumen (6) in zu einer Radialrichtung parallel verlaufenden Schnittebenen (S1, S2), die durch jeweils einen der wenigstens zwei Punkte (P1, P2) verlaufen und senkrecht auf der Verlaufsrichtung (5) an dem jeweiligen Punkt (P1, P2) stehen, jeweils eine parallel zu der Basisfläche gemessene Tiefe, eine parallel zu der Radialrichtung gemessene Höhe und einen Verrundungsradius aufweist, der eine konkave Krümmung zwischen dem Vorsprungvolumen (6) und einer Laufstreifenoberfläche beschreibt.

Das Vorsprungvolumen (6) weist an dem ersten Punkt eine kleinere Tiefe, eine größere Höhe und/oder einen kleineren Verrundungsradius auf als an dem zweiten Punkt.

## Beschreibung

Laufstreifen für einen Fahrzeugreifen, wobei in dem Laufstreifen radial unterhalb einer Basisfläche verlaufendes Negativvolumen und radial oberhalb der Basisfläche verlaufendes Vorsprungvolumen ausgebildet sind, wobei Schnittlinien an der Grenze zwischen dem Negativvolumen und der Basisfläche definiert werden können, wobei die Schnittlinien wenigstens punktweise bestimmbare Verlaufsrichtungen aufweisen, wobei eine Verlaufsrichtung an einem ersten Punkt einen größeren Winkel mit der Axialrichtung einschließt als eine Verlaufsrichtung an einem zweiten Punkt, wobei das einem jeweiligen Punkt am nächsten gelegene Vorsprungvolumen in zu einer Radialrichtung parallel verlaufenden jeweiligen Schnittebenen, die durch jeweils einen der wenigstens zwei Punkte verlaufen und senkrecht auf der Verlaufsrichtung an dem jeweiligen Punkt stehen, jeweils eine parallel zu der Basisfläche gemessene Tiefe, jeweils eine parallel zu der Radialrichtung gemessene Höhe und jeweils einen Verrundungsradius aufweist, wobei der Verrundungsradius eine konkave Krümmung an einem Übergang zwischen dem Vorsprungvolumen und einer zu der Basisfläche parallelen Laufstreifenoberfläche beschreibt.

Es ist an sich bekannt, Vorsprünge in Laufsteifen auszubilden. Insbesondere können Profilblöcke mit radial vorstehenden Kantenbereichen versehen werden, wobei letztere als Schneekanten einen Milling-Effekt erzielen und die Traktion auf Schnee verbessern können. Üblicherweise sind Schneekanten direkt an der Rillenflanke einer Profilrille bzw. am Rande eines Profilblocks ausgebildet oder weisen in geringem Abstand dazu einen parallelen Verlauf zu diesen auf. Insbesondere in Winterreifen und Ganzjahresreifen besteht ein Großteil des Negativvolumens üblicherweise aus V-förmig verlaufende Schrägrillen, wobei die Verlaufsrichtungen der Schrägrillen zum Reifenäquator hin zunehmend größere Winkel mit der Axialrichtung einschließen als in den Reifenschultern. Häufig an einem Reifen anliegenden Kräfte entstehen beim Beschleunigen bzw. beim Bremsen und wirken parallel zur Umfangsrichtung. Insbesondere bei Gefahrenbremsungen können besonders hohe Umfangskräfte auftreten. Senkrecht zu den Verlaufsrichtungen der Schneekanten wirkende Projektionen dieser Umfangskräfte können daher je nach axialer Position im Laufstreifen signifikant variieren. Dies kann dazu führen, dass eine Schneekante in der Reifenschulter bei starken Umfangskräften umknickt und/oder beschädigt wird, wohingegen eine Schneekante am Reifenäquator aufgrund eines großen Umfanganteils der Verlaufsrichtung nur eine begrenzte Wirksamkeit entfalten kann. Grundsätzlich ist es zudem vorteilhaft für den Rollwiderstand, eine Schneekante nicht größer als notwendig zu dimensionieren, sodass eine Schneekante in dem oben beschriebenen Szenario in der Umgebung des Reifenäquators tendenziell überdimensioniert sein kann.

Der Erfindung liegt die Aufgabe zugrunde, Stabilität und Wirksamkeit einer Schneekante über den gesamten Laufstreifen hinweg zu optimieren.

Die Aufgabe wird erfindungsgemäß dadurch gelöst, dass das Vorsprungvolumen an dem ersten Punkt eine kleinere Tiefe und/oder eine größere Höhe und/oder einen kleineren Verrundungsradius aufweist als an dem zweiten Punkt.

Die Erfindung erkennt, dass eine kleinere Tiefe, eine größere Höhe und/oder ein kleinerer Verrundungsradius eines Vorsprungs einem stärkeren Fräsverhalten zuträglich sein können, wobei eine größere Tiefe, eine kleinere Höhe und/oder ein größerer Verrundungsradius eine höhere Stabilität gegenüber in der Schnittebene und parallel zur Tiefe wirkenden Kräften gewährleistet. Durch die Zuordnung von entsprechend ausgestalteten Querschnitten des Vorsprungs zu den Winkeln der Verlaufsrichtung bzw. zu den senkrecht darauf wirkenden Komponenten der Umfangskräfte kann das Vorsprungvolumen lokal optimiert werden, sodass die Schneekante an jeder Position im Laufstreifen ein ideal abgestimmtes Maß an Stabilität und Fräsvermögen aufweist.

Sofern im vorliegenden Text die Richtungsbezeichnungen axial, in Axialrichtung, radial, in Radialrichtung und in Umfangsrichtung verwendet werden, beziehen sich diese auf den bestimmungsgemäß an einem Fahrzeugreifen angebrachten Laufstreifen bzw. den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. **In** Radialrichtung nach innen bezieht sich auf die Orientierung, die in Radialrichtung der Rotationsachse zugewandt ist. **In** Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 180° Umdrehung des Fahrzeugreifens früher einen minimalen Abstand zum Fahrbahnuntergrund als eine in Umfangsrichtung hintere Position. Die Axialrichtung bezieht sich auf eine Richtung parallel zur Drehachse. Axial nach innen zeigend bezieht sich dabei auf eine Orientierung, die einem Reifenäquator, einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere können die Umfangsrichtung und die Querrichtung auf einer Basisfläche des Laufstreifens verlaufen. Die Basisfläche fällt zusammen mit jener glatten Oberfläche, welche der Laufstreifen aufweisen würde, wenn keinerlei kleinskalige Profilelemente, wie etwa Rillen oder Schneekanten vorgesehen wären. Kleinskalige Profilelemente sind wenigstens in einer der drei Dimensionen Radialrichtung, Axialrichtung und Umfangsrichtung durch eine Abmessung und/oder durch einen Krümmungsradius gekennzeichnet, der kleiner oder gleich einer maximale Profiltiefe in dem Fahrzeugreifen ist. Die Basisfläche bleibt konkret überall dort physisch erhalten, wo keine solchen Profilelemente vorgesehen sind. Die erhaltenen Abschnitte der Basisfläche können wenigstens teilweise für einen Kontakt mit einem Fahrbahnuntergrund bestimmt sein und mit einer Lauffläche des Laufstreifens zusammenfallen. Dort, wo beispielweise eine Rille durch einen Laufstreifen des Fahrzeugreifens verläuft, verläuft die Basisfläche als imaginäre Fläche oberhalb der Rille weiter; dort wo beispielsweise eine Schneekante auf dem Laufstreifen angeordnet ist, verläuft die Basisfläche als imaginäre Fläche unter der Schneekante weiter.

Alle beschriebenen Merkmale beziehen sich insbesondere auf einen Neuzustand des Laufstreifens. Die mit den Merkmalen des Hauptanspruchs erzielten Effekte können durch bevorzugte Ausführungsformen und Ausgestaltungen unterstützt und weiter verstärkt werden.

Die erfindungsgemäß definierten Beziehungen zwischen den Winkel auf der einen Seite und den Tiefen und/oder den Höhen und/oder den Verrundungsradii auf der anderen Seite können wenigstes zu einer Untermenge aus der Gesamtheit beliebiger Paare von Punkten auf den Schnittlinien gelten, insbesondere solchen, zu denen Verlaufsrichtungen mit voneinander verschiedenen Winkeln gegenüber der Axialrichtung bestimmbar sind. Hierbei kann die Untermenge wenigstens zwei direkt zueinander benachbarte, durch keinen Knick in der Schnittlinie voneinander getrennte Punkte umfassen. **In** einer Ausführungsform beschreibt die Schnittlinie in einem ersten Abschnitt eine Kurve mit kontinuierlich veränderlichem Winkel, wobei die Tiefen und/oder die Höhen und/oder die Verrundungsradii des Vorsprungvolumens zu jedem Punkt innerhalb des ersten Abschnitts in einer erfindungsgemäßen Relation zu dem entsprechenden Winkel stehen. Hierzu kann eine mathematische Funktion für den Zusammenhang zwischen der Geometrie des Vorsprungs in den Schnittebenen und den Winkeln der Verlaufsrichtungen aufgestellt werden. Wenn der erste Abschnitt eine monotone Krümmungsrichtung aufweist, können zunächst zu dem größten und zu dem kleinsten Winkel der Verlaufsrichtung im ersten Abschnitt jeweils Tiefen und/oder Höhen und/oder Verrundungsradii festgelegt werden, daraufhin kann die Geometrie des Vorsprungvolumens zu allen dazwischengelegenen Punkten interpoliert werden.

Gemäß einer Ausführungsform beträgt die Untermenge aus der Gesamtheit beliebiger Paare von Punkten auf den Schnittlinien, zu welchen die erfindungsgemäßen Beziehungen zwischen den Winkel auf der einen Seite und den Tiefen und/oder den Höhen und/oder den Verrundungsradii auf der anderen Seite gelten, wenigstens 50% der Gesamtheit. Auf diese Weise kann ein möglichst großer Anteil des Laufstreifens mit erfindungsgemäß optimierten Vorsprüngen versehen werden.

Zwischen dem Negativvolumen können Profilblöcke definiert sein, wobei der erste Punkt an einem ersten Profilblock und der zweite Punkt an einem zweiten Profilblock angeordnet sein kann. In diesem Szenario kann wenigstens das auf einem der Profilblöcke angeordnete Vorsprungvolumen wenigstens abschnittsweise eine konstante Tiefe und/oder eine konstante Höhe und/oder einen konstanten Verrundungsradius aufweist. Dies kann damit zusammenhängen, dass auch der Winkel der Verlaufsrichtung der Schnittlinie bzw. der Winkel des Verlaufs einer entsprechenden Blockkante konstant ist. Jedoch sind auch Ausführungsformen vorgesehen, gemäß denen die Geometrie des Vorsprungvolumens in den Schnittebenen bei veränderlichem Winkel der Verlaufsrichtung konstant bleibt. Hierdurch können beispielsweise die Herstellung des Laufstreifens und einer dazu geeigneten Reifenform vereinfacht werden.

In einer bevorzugten Ausführungsform sind wenigstens Teile des Negativvolumens, an dessen Grenze Schnittlinien mit punktweise zugeordneten Verlaufsrichtungen und Vorsprunggeometrien definiert sind, als Schrägrillen ausgebildet sind. Vorzugsweise sind in dem Laufstreifen mehrere entsprechende Schrägrillen in einem V-förmigen Muster angeordnet. In einem solchen, grundsätzlich von Winterreifen und Ganzjahresreifen bekannten Profil entfaltet das erfindungsgemäß optimierte Vorsprungvolumen seine Wirkung besonders vorteilhaft.

Das Vorsprungvolumen zu dem ersten Punkt kann eine Tiefe von wenigstens 0,2 mm aufweisen. Unterhalb dieser Tiefe kann der Vorsprung selbst an Positionen mit geringen senkrecht wirkenden Umfangskräften zu unstabil werden. Das Vorsprungvolumen zu dem ersten Punkt kann eine Höhe von höchstens 0,8 mm aufweisen. Oberhalb dieser Höhe kann der Vorsprung selbst an Positionen mit geringen senkrecht wirkenden Umfangskräften zu leicht zum Umknicken neigen. Das Vorsprungvolumen zu dem ersten Punkt kann einen Verrundungsradius von wenigstens 0 mm aufweisen, wobei werkstoff- und produktionsbedingt nur eine asymptotische Annäherung an die Untergrenze von 0 mm zu erwarten ist.

Das Vorsprungvolumen an dem zweiten Punkt kann eine Tiefe von höchstens 0,3 mm aufweisen. Mehr als eine solche Tiefe wird für eine ausreichende Stabilität auch bei hohen senkrecht wirkenden Umfangskräften in der Regel nicht benötigt. Das Vorsprungvolumen an dem zweiten Punkt kann eine Höhe von wenigstens 0,2 mm aufweisen. Weniger als eine solche Höhe würde sich nachteilig auf das Fräsverhalten auswirken. Das Vorsprungvolumen an dem zweiten Punkt kann einen Verrundungsradius von höchstens 2 mm aufweisen. Hiermit ist selbst bei hohen senkrecht wirkenden Umfangskräften eine ausreichende Stabilität gewährleistet.

Das Vorsprungvolumen kann in den zu der Radialrichtung parallel verlaufenden Schnittebenen, die durch jeweils einen der wenigstens zwei Punkte verlaufen und senkrecht zu den Verlaufsrichtungen an dem jeweiligen Punkt verlaufen, einen Abstand zwischen 0 mm und 3 mm von einer Schnittlinie aufweisen. Der Abstand zwischen dem Vorsprung und der Schnittlinie wird zwischen einer der Schnittlinie zugewandten Seite des Vorsprungs und der Schnittlinie ermittelt. Der Vorsprung kann wenigstens entlang eines ersten Teilabschnitts des Vorsprungverlaufs, vorzugsweise entlang eines Großteils oder entlang des gesamten Vorsprungverlaufs parallel zu der Schnittlinie verlaufen.

Die Erfindung betrifft außerdem einen Fahrzeugreifen, umfassend einen vor- und/oder nachstehend beschriebenen Laufstreifen.

Die Erfindung betrifft auch eine Reifenform zur Herstellung eines erfindungsgemäßen Laufstreifens und/oder Fahrzeugreifens.

Der Laufstreifen kann mit weiteren Merkmalen fortgebildet werden, die im Zusammenhang mit dem erfindungsgemäßen Fahrzeugreifen und/oder der erfindungsgemäßen Reifenform beschrieben sind. Der Fahrzeugreifen kann mit weiteren Merkmalen fortgebildet werden, die im Zusammenhang mit dem erfindungsgemäßen Laufstreifen und/oder der erfindungsgemäßen Reifenform beschrieben sind. Die Reifenform kann mit weiteren Merkmalen fortgebildet werden, die im Zusammenhang mit dem erfindungsgemäßen Laufstreifen und/oder dem erfindungsgemäßen Fahrzeugreifen beschrieben sind.

Die Erfindung wird nachfolgend unter Bezugnahme auf die beigefügten Zeichnungen anhand vorteilhafter Ausführungsformen beispielhaft beschrieben. Es zeigen:
Figur 1 schematisch eine seitliche Ansicht einer Ausführungsform eines erfindungsgemäßen Fahrzeugreifens,
Figur 2 schematisch und ausschnittsweise eine Draufsicht auf eine Ausführungsführungsform eines erfindungsgemäßen Laufstreifens,
Figur 3 schematisch eine Schnittansicht eines Profilblocks in einer Ausführungsform eines erfindungsgemäßen Laufstreifens.

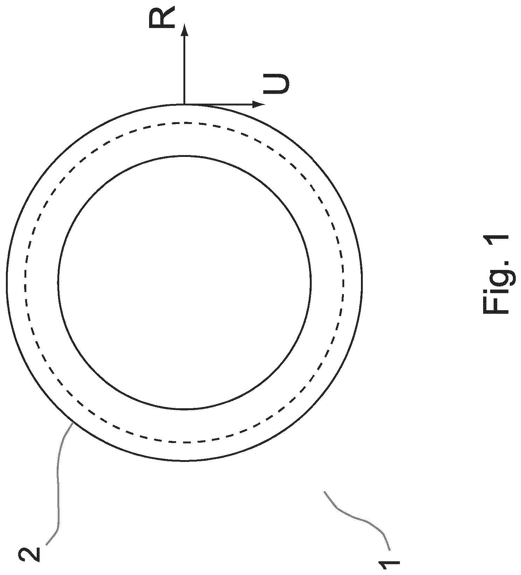

Figur 1 zeigt schematisch eine seitliche Ansicht einer Ausführungsform eines erfindungsgemäßen Fahrzeugreifens 1. Die Radialrichtung R und die Umfangsrichtung U sind mit Pfeilen gekennzeichnet. Radial außen an dem Reifen 1 ist eine Ausführungsform eines erfindungsgemäßen Laufstreifens 2 angeordnet.

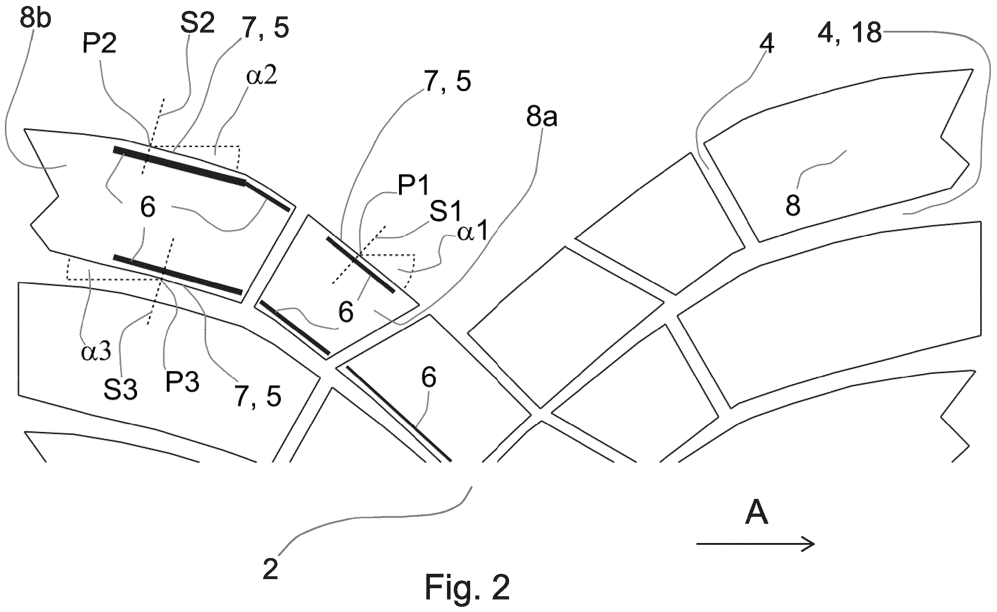

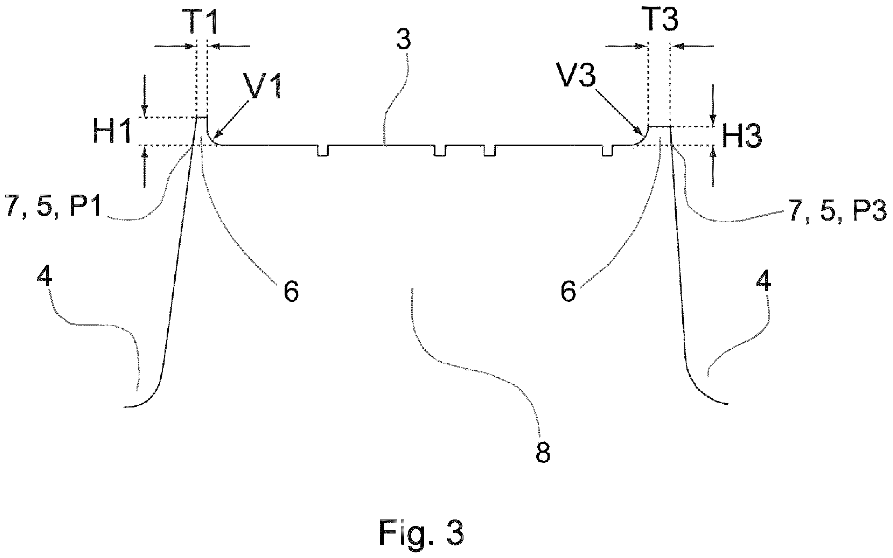

Figur 2 zeigt schematisch und ausschnittsweise eine Draufsicht auf eine Ausführungsführungsform eines erfindungsgemäßen Laufstreifens 2. Die Umfangsrichtung U verläuft in der Zeichnungsebene von oben nach unten, die Axialrichtung A wie eingezeichnet. Mehrere Profilblöcke 8, 8a, 8b werden durch dazwischen verlaufendes Negativvolumen 4 definiert. Prägend für das V-förmige Muster des Profils ist dabei das als Schrägrillen 18 ausgebildete Negativvolumen 4. Schnittlinien 7 zwischen dem Negativvolumen 4 und einer Basisfläche 3 (siehe Figur 3) des Laufstreifens 2 verlaufen an den Kanten der Profilblöcke 8, 8a, 8b. Überall dort, wo die Schnittlinien 7 keine Knicke aufweisen, also im Wesentlichen abseits der Ecken der Profilblöcke 8, 8a, 8b, lassen sich Verlaufsrichtungen 5 der Schnittlinien 7 bestimmen. An drei verschiedenen Punkten P1, P2, P3 entlang der Schnittlinien 7 sind in Figur 2 Winkel α1, α2, α3 zwischen der jeweiligen Verlaufsrichtung 5 und der Axialrichtung A eingezeichnet.

Zudem sind mit durch die Punkte P1, P2, P3 verlaufende gestrichelte Linien die Lagen von Schnittebenen S1, S2, S3 gekennzeichnet, welche von der Radialrichtung R und einer Senkrechten auf der Verlaufsrichtung 5 am jeweiligen Punkt P1, P2, P3 aufgespannt werden. Nahe der Schnittlinien 7 sind schematisch Vorsprungvolumen 6 angedeutet, welche im Wesentlichen parallel zu den Schnittlinien 7 verlaufen. Die prinzipielle Geometrie des Vorsprungvolumens 6 in den Schnittebenen S1, S2, S3 wird anhand von Figur 3 beschrieben. Bereits in Figur 2 ist aber eine variable Tiefe T des Vorsprungvolumens 6 angedeutet, wobei eine größere Linienstärke eine größere Tiefe T entlang der Basisfläche 3 und in der Schnittebene S1, S2, S3 bedeutet. Somit ist erkennbar, dass das Vorsprungvolumen 6 in der Schnittebene S1, welche durch den ersten Punkt P1 verläuft, eine kleinere Tiefe T aufweist als in der Schnittebene S2, die durch den zweiten Punkt verläuft. Gleichzeitig schließt die Verlaufsrichtung 5 der Schnittline 7 an Punkt P2 einen kleineren Winkel α2 mit der Axialrichtung A ein als an Punkt 1. Somit ist das Vorsprungvolumen 6 dort tiefer und stabiler, wo größere Anteile von Umfangskräften entlang der Schnittebene S2 wirken, andererseits aber dort weniger tief und mit besserem Fräsverhalten ausgeführt, wo die Schnittebene S1 einen größeren Winkel mit der Umfangsrichtung U einschließt. Auf diese Weise kann die Geometrie des Vorsprungvolumens 6 in den Schnittebenen S1, S2, S3 abhängig von der Lage im Laufstreifen 2 und insbesondere abhängig von dem Winkel der Schnittebene S1, S2, S3 zur Umfangsrichtung bzw. dem Winkel α1, α2, α3 der Verlaufsrichtung 5 zur Axialrichtung auf Stabilität und Fräsverhalten optimiert werden.

Figur 3 zeigt schematisch eine Schnittansicht eines Profilblocks 8 in einer Ausführungsform eines erfindungsgemäßen Laufstreifens 2. Der Profilblock 8 kann, muss aber nicht der in Figur 2 abgebildeten Ausführungsform 2 entstammen. In der Zeichnungsebene links und rechts ist der Profilblock 8 von Negativvolumen 4 begrenzt; radial oben ist der Profilblock 8 entlang großer Teile seiner Umfangserstreckung und axialen Erstreckung durch die Basisfläche 3 definiert. Zwischen dem Negativvolumen 4 und der Basisfläche 3 sind Schnittlinien 7 definiert, deren Verlaufsrichtungen 5 in Figur 3 senkrecht auf der Zeichnungsebene stehen. In der Zeichnungsebene und auf den Schnittlinien 7 sind links und rechts des Profilblocks 8 jeweils ein Punkt P1 und P3 markiert. Die Zeichnungsebene fällt zusammen mit zu einer Radialrichtung parallel verlaufenden Schnittebenen, die durch jeweils einen der zwei Punkte P1, P3 verlaufen.

Gemäß der Ausführungsform in Figur 3 ist Vorsprungvolumen 6 direkt an den Schnittlinien 7 bzw. an beiden in Figur 3 sichtbaren Kanten des Profilblocks 8 angeordnet; gemäß anderen Ausführungsformen kann jedoch auch ein Abstand zwischen Vorsprungvolumen 6 und Schnittlinien 7 vorgesehen sein. Bei Punkt 1 erhebt sich das Vorsprungvolumen 6 um eine Höhe H1 über der Basisfläche 3 und weist dort entlang einer Tiefe T1 ein Plateau auf. An einer der Schnittlinie 7 abgewandten Seite des Vorsprungvolumens 6 geht dieses mit einer durch einen Verrundungsradius V1 charakterisierten Verrundung in die Basisfläche 3 über. Bei Punkt 3 erhebt sich ein der prinzipiellen Geometrie nach jenem bei Punkt 1 ähnliches Vorsprungvolumen 6, wobei im Vergleich die Höhe H3 geringer, die Tiefe T3 größer und der Verrundungsradius V3 größer ist. Das bei Punkt P1 angeordnete Vorsprungvolumen 6 weist aufgrund seiner spitzen Form ein besseres Fräsverhalten auf als das Vorsprungvolumen 6 bei Punkt P3, wobei letzteres eine größere Stabilität gegen Verformung und Beschädigung aufweist.

Die in Figur 3 abgebildeten Punkte P1, P3 sind insofern kein Punktepaar aus erstem und zweitem Punkt im Sinne der Erfindung, als die Verlaufsrichtungen 5 an den Punkten P1, P3 parallel zueinander, senkrecht zur Zeichnungsebene ausgerichtet sind. Figur 3 dient aber dennoch zur Veranschaulichung zweier verschiedener Querschnitte von Vorsprungvolumen 6, wobei in einer erfindungsgemäßen Anwendung die größere Höhe H1 und/oder die kleinere Tiefe T1 und/oder der kleinere Verrundungsradius V1 einem größeren Winkel α1 zwischen Verlaufsrichtung 5 und Axialrichtung A am zugehörigen Punkt P1 zugeordnet würde und die kleinere Höhe H3 und/oder die größere Tiefe T3 und/oder der größere Verrundungsradius V3 einem im Vergleich zu α1 kleineren Winkel α3 zwischen Verlaufsrichtung 5 und Axialrichtung am zugehörigen Punkt P3. Auf diese Weise kann dort, wo entlang der Schnittebene S1, S2, S3 (siehe Figur 2) und senkrecht zur Schnittlinie 7 größere Komponenten von Umfangskräften wirken ein stabileres Vorsprungvolumen 6 vorgesehen werden und dort, wo kleinere Kraftkomponenten anliegen, ein schlankeres, höheres und/oder spitzeres Vorsprungvolumen 6 mit entsprechend besserem Fräsverhalten ausgebildet werden.

### Bezugszeichenliste

- 1: Fahrzeugreifen
- 2: Laufstreifen
- 3: Basisfläche
- 4: Negativvolumen
- 5: Verlaufsrichtung
- 6: Vorsprungvolumen
- 7: Schnittlinie
- 8: Profilblock
- 8a: erster Profilblock
- 8b: zweiter Profilblock
- 18: Schrägrille
- A: Axialrichtung
- H1: Höhe des Vorsprungvolumens (zu erstem Punkt P1)
- H3: Höhe des Vorsprungvolumens (zu zweitem Punkt P3)
- P1: erster Punkt
- P2: zweiter Punkt
- P3: dritter Punkt
- R: Radialrichtung
- S1: Schnittebene (verlaufend durch ersten Punkt P1)
- S2: Schnittebene (verlaufend durch Punkt P2)
- S3: Schnittebene (verlaufend durch Punkt P3)
- T1: Tiefe des Vorsprungvolumens (zu erstem Punkt P1)
- T3: Tiefe des Vorsprungvolumens (zu zweitem Punkt P3)
- U: Umfangsrichtung
- V1: Verrundungsradius des Vorsprungvolumens (zu erstem Punkt P1)
- V3: Verrundungsradius des Vorsprungvolumens (zu zweitem Punkt P3)
- α1: Winkel der Verlaufsrichtung von Schnittlinie (an erstem Punkt P1)
- α2: Winkel der Verlaufsrichtung von Schnittlinie (an zweitem Punkt P2)
- α3: Winkel der Verlaufsrichtung von Schnittlinie (an zweitem Punkt P3)

## Patentansprüche

1. Laufstreifen (2) für einen Fahrzeugreifen (1), wobei in dem Laufstreifen (2) radial unterhalb einer Basisfläche (3) verlaufendes Negativvolumen (4) und radial oberhalb der Basisfläche (3) verlaufendes Vorsprungvolumen (6) ausgebildet sind, wobei Schnittlinien (7) an der Grenze zwischen dem Negativvolumen (4) und der Basisfläche (3) definiert werden können, wobei die Schnittlinien (7) wenigstens punktweise bestimmbare Verlaufsrichtungen (5) aufweisen, wobei eine Verlaufsrichtung (5) an einem ersten Punkt (P1) einen größeren Winkel (α1) mit der Axialrichtung (A) einschließt als eine Verlaufsrichtung (5) an einem zweiten Punkt (P2), wobei das einem jeweiligen Punkt (P1, P2) am nächsten gelegene Vorsprungvolumen (6) in zu einer Radialrichtung parallel verlaufenden jeweiligen Schnittebenen (S1, S2), die durch jeweils einen der wenigstens zwei Punkte (P1, P2) verlaufen und senkrecht auf der Verlaufsrichtung (5) an dem jeweiligen Punkt (P1, P2) stehen, jeweils eine parallel zu der Basisfläche (3) gemessene Tiefe (T1, T2), jeweils eine parallel zu der Radialrichtung (R) gemessene Höhe (H1, H2) und jeweils einen Verrundungsradius (V1, V2) aufweist, wobei der Verrundungsradius (V1, V2) eine konkave Krümmung an einem Übergang zwischen dem Vorsprungvolumen (6) und einer zu der Basisfläche (3) parallelen Laufstreifenoberfläche beschreibt,
**dadurch gekennzeichnet,**
**dass** das Vorsprungvolumen (6) an dem ersten Punkt (P1) eine kleinere Tiefe (T1) und/oder eine größere Höhe (H1) und/oder einen kleineren Verrundungsradius (V1) aufweist als an dem zweiten Punkt (P2).

2. Laufstreifen (2) gemäß Anspruch 1, **dadurch gekennzeichnet, dass** wenigstes zu einer Untermenge aus der Gesamtheit beliebiger Paare von Punkten (P1, P2) auf den Schnittlinien (7), zu denen Verlaufsrichtungen (5) mit voneinander verschiedenen Winkeln (α1, α2) gegenüber der Axialrichtung (A) bestimmbar sind, die in Anspruch 1 definierten Beziehungen zwischen den Winkel (α1, α2) auf der einen Seite und den Tiefen (T1, T2) und/oder den Höhen (H1, H2) und/oder den Verrundungsradii (V1, V2) auf der anderen Seite gelten, wobei die Untermenge wenigstens zwei direkt zueinander benachbarte, durch keinen Knick in der Schnittlinie (7) voneinander getrennte Punkte (P1, P2) umfasst.

3. Laufstreifen (2) gemäß Anspruch 2, **dadurch gekennzeichnet, dass** die Untermenge wenigstens 50% der Gesamtheit beträgt.

4. Laufstreifen (2) gemäß einem der Ansprüche 1 bis 3, **dadurch gekennzeichnet, dass** zwischen dem Negativvolumen (4) Profilblöcke (8, 8a, 8b) definiert sind, wobei der erste Punkt (P1) an einem ersten Profilblock (8a) und der zweite Punkt (P2) an einem zweiten Profilblock (8b) angeordnet ist, wobei wenigstens das auf einem der Profilblöcke (8a, 8b) angeordnete Vorsprungvolumen (6) je Profilblock (8a, 8b) wenigstens abschnittsweise eine konstante Tiefe (T1, T2) und/oder eine konstante Höhe (H1, H2) und/oder einen konstanten Verrundungsradius (V1, V2) aufweist.

5. Laufstreifen (2) gemäß einem der Ansprüche 1 bis 4, **dadurch gekennzeichnet, dass** wenigstens Teile des Negativvolumens (4), an dessen Grenze Schnittlinien (7) mit Punkten (P1, P2) definiert sind, als Schrägrillen (18) ausgebildet sind.

6. Laufstreifen (2) gemäß einem der Ansprüche 1 bis 5, **dadurch gekennzeichnet, dass** das Vorsprungvolumen (6) an dem ersten Punkt (P1) eine Tiefe (T1) von wenigstens 0,2 mm und/oder eine Höhe (H1) von höchstens 0,8 mm und/oder einen Verrundungsradius (V1) von wenigstens 0 mm aufweist.

7. Laufstreifen (2) gemäß einem der Ansprüche 1 bis 6, **dadurch gekennzeichnet, dass** das Vorsprungvolumen (6) an dem zweiten Punkt (P2) eine Tiefe (T2) von höchstens 0,3 mm und/oder eine Höhe (H2) von wenigstens 0,2 mm und/oder einen Verrundungsradius (V2) von höchstens 2 mm aufweist.

8. Laufstreifen (2) gemäß einem der Ansprüche 1 bis 7, **dadurch gekennzeichnet, dass** das Vorsprungvolumen (6) in den zu der Radialrichtung (R) parallel verlaufenden Schnittebenen (S1, S2), die durch jeweils einen der wenigstens zwei Punkte (P1, P2) verlaufen und senkrecht zu den Verlaufsrichtungen (5) an dem jeweiligen Punkt (P1, P2) verlaufen, einen Abstand zwischen 0 mm und 3 mm von einer Schnittlinie (7) aufweist.

9. Fahrzeugreifen (1), umfassend einen Laufstreifen (2) gemäß einem der Ansprüche 1 bis 8.
